# EUROPEAN PATENT APPLICATION

(11) **EP 3 332 901 A1**
(43) Date of publication of application: **13.06.2018**
(21) Application number: 16202521.7
(22) Date of filing: 06.12.2016
(51) Int. Cl.: B23B 47/28

(54) **A DRILL JIG FOR GUIDING A DRILL BIT WHEN DRILLING HOLES IN AN ELONGATED ELEMENT**

(71) Applicant: Locinox, 8790 Waregem (BE)
(72) Inventor: TALPE, Joseph, 8551 Heestert-Zwevegem (BE)
(74) Representative: Gevers Patents

(57) **Abstract**

A drill jig having a frame (3) with multiple drill bit guides (5a-d) to enable drilling holes in an elongated element (2); two clamping members (9) pivotably attached to the frame (3), each clamping member (9) having two opposite contact elements (9a) and being pivotable between an extended position and a retracted position to secure the drill jig to the elongated element (2); and an actuation mechanism (10, 13) for pivoting the clamping members (9) between their extended and retracted positions. Because each clamping member (9) is pivotably attached to the frame (3), the frame (3) remains stationary with respect to the elongated element (2). Specifically, when the same drill jig is used for different elongated elements (2), the inclination of the frame (3) with respect to the elongated element (2) will not change. It is therefore possible to provide multiple drill bit guides (5) in the frame (3) thus improving the accuracy of the distance between the multiple holes.

## Description

The present invention is related to a drill jig for guiding a drill bit when drilling holes in an elongated element, the drill jig comprising a frame provided with a first drill bit guide to enable drilling a first hole in the elongated element; two clamping members attached to the frame, each clamping member having two opposite contact elements and being movable, with its contact elements, between an extended position and a retracted position to enable, when the drill jig is positioned on the elongated element, clamping the two opposite contact elements of each clamping member against opposite sides of the elongated element to secure the drill jig to the elongated element; and an actuation mechanism for moving the clamping members between their extended and retracted positions.

Such a drill jig is known in the art and commercially available under the form of the "DBB Morticer" manufactured by "Souber Tools". This drill jig is used to cut a mortice for a lock into the edge of a door. Moreover, this drill jig can also be used to drill a circular hole in the door and also through the entire length of the door. This hole is in particular intended to place a cable into the door for electrically connecting an electrical lock.

The known drill jig comprises two rods, each having a metal clamp element on both the lower end and on the upper end. The clamp elements, and thus also the rods, can be moved closer or further away from one another by an actuation mechanism comprising two adjusting screws that connect the lower clamping members with one another and the upper clamping members. In this way it is possible to clamp the drill jig to the door. The drill jig further comprises a rotatable frame element that is obliquely mounted between the rods with a drill bit guide in the centre of the rotatable element that is used to guide the drill bit. When the distance between the rods changes, i.e. when the thickness of the door changes, the inclination of the rotatable frame element also changes. As such, the guide in the rotatable frame element always remains centred with respect to the rods, and thus with respect to the door.

To cut a mortice into a door using this drill jig, the rotatable frame element can slide along the rods with the upper and lower clamp elements being used as a stop to limit the vertical movement of the rotatable element, and thus of the drill bit. Similarly, the upper clamp element can also be moved along the rods. As such, the height of the mortice can be changed. Moreover, when the upper clamp element are moved close to the lower clamp element the rotatable element is no longer slidable and is fixed at a certain height to cut a circular hole in and/or through the door.

A downside of this drill jig is that it is very hard to drill multiple circular holes accurately on the required mutual distances. In particular, when multiple circular holes need to be drilled in the same door, the tool will have to be clamped and unclamped repeatedly to fix the rotatable frame element at various heights corresponding to the various positions of the multiple circular holes. This clamping and unclamping is time consuming and leads to inaccuracies in the distance between the multiple holes. Such inaccuracies are not acceptable when the holes serve to fix an article such as a lock or a lock keep to a gate or a poste. In particular for a lock which is fixed to one side of an upright of a gate so that its bolt or bolts need to extend through holes in this upright, for example a lock as disclosed in EP-B-1 118 739, the required holes have to be provided in the required mutual positions so that there is no contact between the moving bolts and these holes.

It is an object of the present invention to provide a drill jig that can be used to drill multiple circular holes in an elongated element in an easier and more accurate way, with each of the holes being in a fixed position with respect to one another and being correctly aligned onto the elongated element.

To this end, the drill jig according to the invention is characterized in that the frame of the drill jig is provided with at least one second drill bit guide, which second drill bit guide enables drilling a second hole in the elongated element in a predetermined position with respect to said first hole and in that each clamping member is movable between its extended and retracted positions by being pivotably attached to the frame around a pivot axis, with the clamping member comprising two arms which are situated on opposite sides of said pivot axis and which are provided with said contact elements.

Because each clamping member is pivotably attached to the frame around a pivot axis to enable to move the clamping member between its extended and retracted positions, the frame can simply be held at the required height on the elongated element. When clamping the clamping members against the elongated element, the frame is automatically urged in the correct position relative to the centre of the elongated element and this independent of the thickness of the elongated element. Specifically, when the same drill jig is used for different elongated elements, e.g. a metal post, a door, etc., having different thicknesses, the inclination of the frame with respect to the elongated element will not change, i.e. the drill jig is always correctly aligned with its frame with respect to the longitudinal axis of the elongated element, but the inclination of the clamping members with respect to the frame will change instead. It is therefore possible to provide multiple drill bit guides in the frame which, when the drill jig is clamped on the elongated element, can be used to drill multiple circular holes in the elongated element without having to change the position of the frame. This avoids having to clamp and unclamp the drill jig to drill multiple holes thus improving the accuracy of the distance between the multiple holes, i.e. the accuracy of the mutual positions of the multiple holes.

In an embodiment of the present invention, when the drill jig is secured to the elongated element, the opposite contact elements of the clamping members abut the elongated element on a distance from the pivot axis of the respective pivot axis, measured in a direction perpendicular to said pivot axis, which is substantially the same for both opposite contact elements.

In this embodiment, the pivot axis is centred with respect to the opposite contact elements. As such, when the drill jig is secured to the elongated element, the drill jig will also be centred with its pivot axis with respect to the elongated element. The drill bit guides which are aligned with the two pivot axes will therefore also be centred on the elongated element. If the drill bit guides are not aligned with the two pivot axes, the holes drilled in the elongated elements will always be over a same distance out of centre of the elongated element, which may for example be the case when two holes are made on a same height on the elongated element, one on the left side of the centre thereof and the other one on the right side of the centre, on a same distance from this centre.

In a preferred embodiment of the present invention, said first and second drill bit guides are located symmetrically with respect to a plane β passing through the two pivot axes of the two clamping members.

The pattern of the drill bit guides, and therefore also the pattern of the holes that are to be drilled in the elongated element, is automatically centred with respect to the longitudinal axis of the elongated element when clamping the drill jig with its clamping members onto the elongated element.

In an embodiment of the present invention, said opposite contact elements have a surface arranged for abutting one of said opposite sides of the elongated element, which surface has a convex shape.

The convex shape of the surface helps to counter the difference in inclination between the contact elements and the elongated element for varying widths/thicknesses of the elongated element. It also reduces the resistance offered by the contact elements when they slide over the side of the elongated element when rotating the clamping member until the both contact elements thereof are clamped against the respective side of the elongated element.

In an embodiment of the present invention, said actuation mechanism comprises a rod which couples one of said arms of one of said clamping members with one of said arms of the other one of said clamping members.

The use of a rod leads to a simple design of the actuation mechanism.

Preferably, the rod is screwed in one of said arms which are coupled by the rod, the rod being rotatable about its longitudinal axis to enable to screw the rod into and out of said arm to adjust the distance between said arms and hence to pivot the clamping members around their pivot axes.

Due to the screw connection between the rod and at least one of the arms of the clamping members, a high rotational force can be exerted onto the clamping members so that they can be clamped with their contact elements strongly against the sides of the elongated member.

Preferably, the rod is screwed in the two arms which are coupled by the rod, the rod having a threaded portion by means of which it is screwed in one of said arms and a further threaded portion, having an opposite screw direction with respect to a screw direction of said threaded portion, by means of which it is screwed in the other one of said arms.

The two threaded portions with opposite screw direction enable moving the clamping members between their extended and retracted positions faster.

In an alternative embodiment of the present invention, the actuation mechanism comprises a spring which is arranged between one of said arms of one of said clamping members and one of said arms of the other one of said clamping members, which spring urges the clamping members to their retracted position.

In this alternative embodiment, the rod is substituted by a tensioning spring that urges the clamping members to their retracted positions. The advantage thereof is that there is no need to manually move the clamping members to their retracted position, thus saving time when securing the drill jig to the elongated element. A manual intervention is only needed to pull the clamping members towards their extended positions to enable to apply the drill jig onto the elongated member.

In a further alternative embodiment, the actuation mechanism comprises: a first spring connecting one of said clamping members to the frame; and a second spring connecting the other one of said clamping members to the frame, the first spring and the second spring urging the clamping members to their retracted positions.

In this further alternative embodiment, each clamping member is urged in its retracted position by a tensioning spring. As such, there is also no need to manually move the clamping members to their retracted position, thus saving time when securing the drill jig to the elongated element.

The invention will be further elucidated by means of the following description and the appended figures.
Figure 1 shows a perspective view of a drill jig according to the present invention clamped on an elongated upright element of a gate.
Figure 2 shows a front view of the drill jig of Figure 1 which is being clamped on the gate and indicates the pivoting of the clamping members when clamping the drill jig onto the gate.
Figure 3 shows a back view of the drill jig of Figure 1 which is clamped on the gate.
Figures 4 and 5 show a perspective view, from different angles, of the alignment of the drill jig illustrated in the previous figures with the multiple holes that have been drilled in the elongated element of the gate by means of the drill jig.
Figures 6 and 7 are analogous to Figure 2 but illustrate embodiments with a different actuation mechanism of the clamping members.

As used herein, the term "drill jig" is intended to refer to a tool that expedites drilling holes on elongated elements, e.g. gates, doors, posts, etc., by clamping a template to the elongated element which is used to guide a drill bit into the precise location of each intended hole.

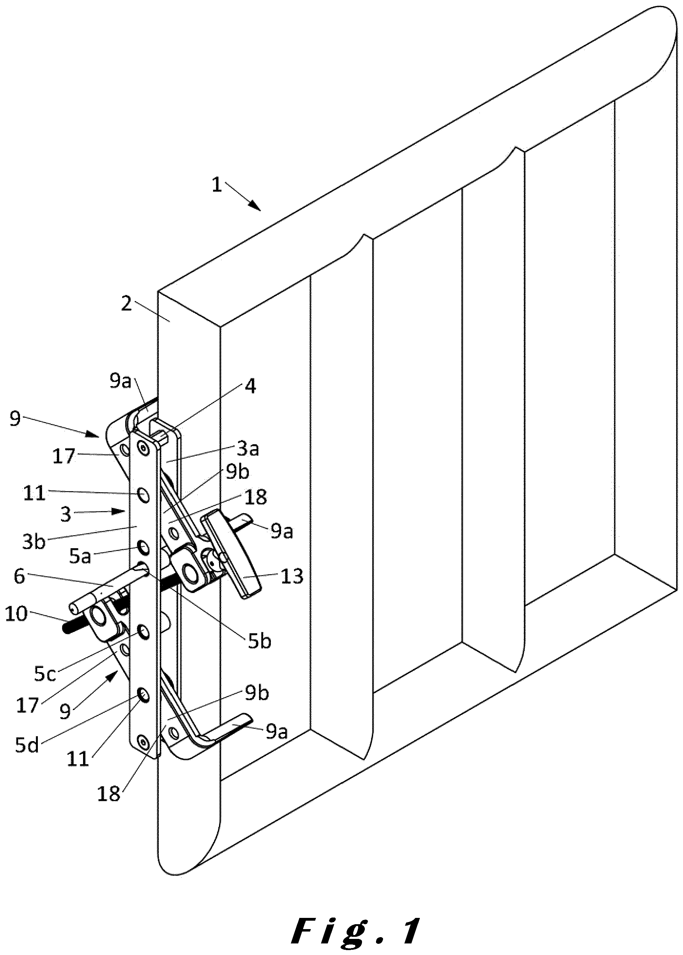

Figure 1 shows a drill jig according to the invention clamped on a gate 1, in particular on an elongated element 2 of the gate 1 formed by a cylindrical vertical metal tube 2. The drill jig is intended to drill the necessary hole through the tube 2 to be able to fix a lock as disclosed in EP-B-1 118 739 to this tube 2. Such a lock is fixed on one side of the elongated element 2 and has a latch bolt and a dead bolt which extend entirely through the elongated element 2.

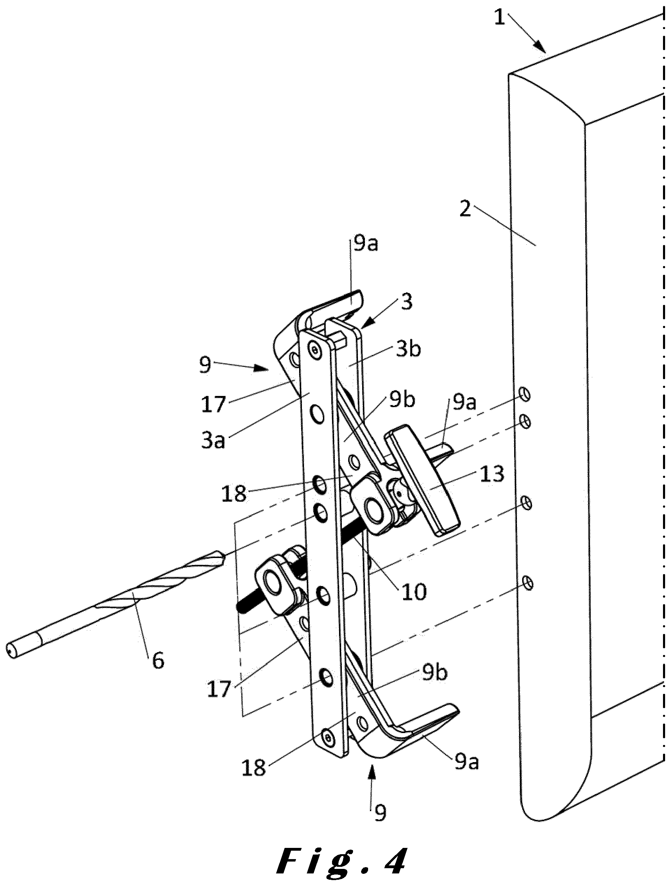

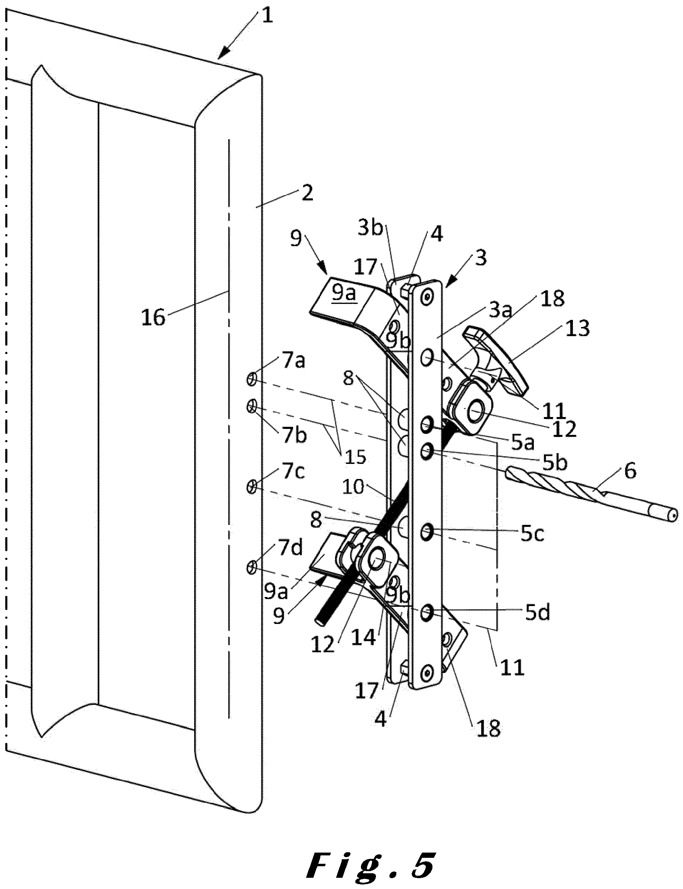

The drill jig has a frame 3 which is formed by two parallel plate-like bars 3a, 3b rigidly connected by two pins 4 inserted in openings in each bar 3a, 3b. In particular, the bar 3b abuts against the cylindrical tube 2 of the gate 1. Each of the bars 3a, 3b has four drill bit guides 5a-d through which a drill bit 6 can be inserted to drill four holes 7a-d (shown in Figures 4 and 5) in the tube 2 of the gate 1. Figure 1 shows that the drill bit guides 5a-d are closed between the bars 3a, 3b. As such, the drill bit guides 5a-d are formed by bushings 8 that guide the drill bit 6.

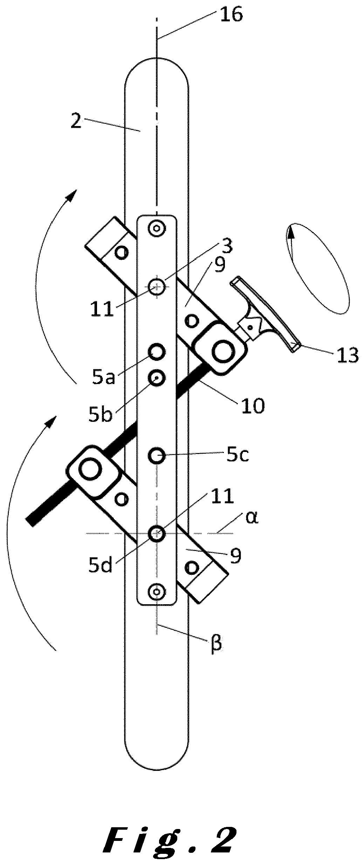

It will be readily appreciated that the two bars 3a, 3b can also be rigidly connected to one another by other means than the pins 4, e.g. screws, nuts and bolts, welding, etc. Further, it will be readily appreciated that the drill jig can also be provided without the bushings 8, in which case the drill bit guides 5a-d are formed by the aligned circular openings in the bars 3a, 3b. Moreover, it will be readily appreciated that the frame 3 can also have more or fewer drill bit guides 5a-d depending on the number of holes 7a-d that need to be drilled in the tube 2 of the gate 1. Also, although the drill bit guides 5a-d are shown on a single vertical line, it is appreciated that it is possible to place the drill bit guides 5a-d in other positions relative to one another, e.g. side-by-side in the four corner points of the frame 3. Usually the drill bit guides are located symmetrically with respect to a symmetry plane β (illustrated in Figure 2). Furthermore, it will be appreciated that the drill bit guides 5a-d need not all have the same radius. In other words various sizes of drill bits 6 can be used to drill various sized holes 7a-d.

The bars 3a, 3b, the pins 4 and the bushings 8 can each be manufactured from various materials, such as wood, plastic, composite materials, metals, etc. Preferably, the bushings 8 are lined with hardened drill materials to protect them from the drill bit 6. Alternatively, the drill bit guides do not comprise a bushing and are formed by the circular openings in the frame. The bars 3a, 3b may be manufactured from a hardened material that is not damaged by the drill bit 6.

Figure 1 illustrates that the drill jig further comprises two clamping members 9 which enable to clamp the drill jig onto the elongated element 2 of the gate 1. Each clamping member 9 is pivotably connected to the frame 3 and both clamping members 9 are connected to one another by an elongated rod 10. Specifically, the elongated element 2 has a longitudinal axis 16 and each clamping member 9 pivots around a pivot axis 11 which is located in a plane α (shown in Figure 2) that is substantially perpendicular to said longitudinal axis 16. Both pivot axes 11 are located in a plane β which, in the illustrated embodiment, also comprises the longitudinal axis 16 of the elongated element 2.

The openings forming the drill bit guides 5a-d can be made in the frame 3 but one or more of them can also be made at the location of the pivot axes 11 of the clamping members 9. This is illustrated, for the lowermost clamping member 9, in Figures 4 and 5. In particular, the connection between the frame 3 and the clamping members 9 is hollow for the bottom clamping member 9.

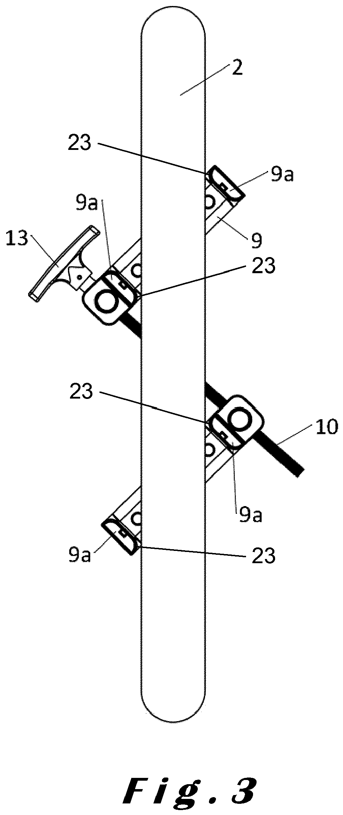

The clamping members 9 of the drill jig illustrated in the drawings each have two arms 17, 18, each arm 17, 18 is situated on opposite sides of the pivot axes 11 and is provided with a contact element 9a. These contact elements 9a project in the direction of the pivot axis 11 from a central segment 9b of the clamping member 9 towards the elongated element 2. It is clear from Figures 1 and 3 that the contact elements 9a of each clamping member 9 abut against opposite sides of the elongated element 2 when the drill jig is clamped onto the elongated element 2. In order to enable to clamp the drill jig onto the elongated element 2, the clamping members 9 can pivot about their pivot axes 11 between an extended position, wherein the rectangle defined by the contact elements 9a has the largest width, and a retracted position, wherein the rectangle defined by the contact elements 9a has the smallest width. The clamping members 9 remain clamped against the elongated element 2 by the rod 10 that connects both clamping members 9 to one another.

In the embodiment illustrated in Figures 1 to 5, the clamping members 9 can be moved between their retracted and extended positions by rotation of the rod 10 which is provided with an operating handle 13 to enable rotating the rod 10 around its longitudinal axis. On both extremities, the rod 10 is provided with opposite screw threads by means of which the rod 10 is screwed, on the one hand, in one arm 17 of the lowermost clamping member 9 which is situated on one side of the plane β and, on the other hand, in one arm 18 of the uppermost clamping member 9 which is situated on the opposite side of the plane β. Each contact element 9a has a surface 23 arranged for abutting one of the opposite sides of the elongated element 2. As can be seen in Figure 3, the surfaces 23 preferably have a convex shape in the area where they engage the sides of the elongated elements 2. The advantage thereof is that the drill jig is more easily useable for different elongated elements 2 having different thicknesses. This is due to the fact that the convex shape counters the difference in inclination, due to differences in thickness between various elongated elements 2, between the contact elements 9a and the opposite sides of the elongated element 2. Moreover, this enables the contact elements 9a to be slid smoothly with respect to the elongated element 2 in the longitudinal direction thereof when tightening the rod 10, i.e. when rotating the clamping members 9 towards their retracted position to clamp the drill jig onto the elongated member 2.

During tensioning or releasing the clamping members 9 by rotating the handle 13, it is clear that the orientation of the rod 10 changes with respect to the orientation of the central segment 9b of each clamping member 9. As such, to avoid unnecessary stresses on the connection of the rod 10 with the clamping members 9, it is advantageous to rotatably couple the rod 10 to each clamping member 9. In the illustrated embodiments, this is achieved by providing a nut 12 on each end of the rod 10, which nut 12 has a cylindrical outer shape and is received in a circular hole in the clamping member so that it can rotate therein around a rotation axis 14 (shown in Figure 5). This rotation axis 14 is substantially parallel to the pivot axes 11.

In the illustrated embodiment, the rod 10 is screwed to the clamping members 9, i.e. to one arm of each clamping member 9, by two nuts 12. Each of the nuts 12 being on a threaded portion, which threaded portions have an opposite screw direction to one another. As such, when rotating the rod 10 around its longitudinal axis, the clamping members 9 will move to the retracted or the extended position twice as fast as compared to providing only a single threaded portion with a single nut 12. It will be appreciated that only one nut 12 and one threaded portion need to be provided on the rod 10 whilst the other extremity rotates freely in the arm of the clamping member but is prevented from sliding in this arm.

The clamping members 9 and the handle 13 can each be manufactured from various materials, such as wood, plastic, composite materials, metals, etc.

In the embodiments shown in the Figures, the pivot axis 11 of each clamping member 9 is located in the central segment 9b of each clamping member 9, in particular, the pivot axis 1 is located in the middle between the two contact elements 9a of the clamping member 9. In other words, when the drill jig is secured to the elongated element, the opposite contact elements 9a-b of the clamping members 9 abut the elongated element 2 on a distance from said pivot axis 11, measured in a direction perpendicular to said pivot axis 11, which is substantially the same for both opposite contact elements 9a-b. By placing the pivot axis 11 in the middle between the contact elements 9a that abut with opposite ends of the elongated element 2, the pivot axes 11 will always be positioned in the middle of the elongated element 2, as is clear from Figure 2, and this independent of the thickness of the elongated element 2. Because, in the illustrated embodiment, the drill bit guides 5 are in a fixed position with respect to the pivot axes 11, they are also centred with respect to the elongated element 2 or they are always automatically situated on a same distance from the centre of the elongated element 2.

Figures 4 and 5 illustrate the drill jig in its extended position, after having drilled the different holes 7a-d in the elongated element 2 and after having removed the drill jig therefrom. These figures clearly illustrate the locations of the holes 7a-d in the tube 2 of the gate 1 and their alignment with the drill bit guides 5 in the frame 3 of the drill jig. In the illustrated embodiment, the holes 7a-d have longitudinal axes 15 that are substantially parallel to the pivot axes 11. In particular, the longitudinal axes 15 cross the centre of the elongated element 2. This is advantageous when the holes 7 need to be drilled trough the entire elongated element 2 because then the holes 7 will be in the middle of the elongated element 2 on both sides thereof.

It will be readily appreciated that the longitudinal axes 15 of the various holes 7a-d can also be differently oriented, e.g. upwardly oriented. Moreover, not all holes 7a-d need to have the same orientation of their respective longitudinal axis 15. To change the orientation of the longitudinal axis 15, only the drill guides 5a-d in the frame 3 need to be modified. For example, the drill bit guides 5a-d in the bar 3b are set slightly higher with respect to the drill bit guides 5 in the bar 3a which would cause holes 7a-d to be drilled with an upward orientation.

In various embodiments, the orientation of the pivot axes 11 can also vary. For example, the pivot axes 11 may be tilted, either upwards or downwards, in the mid-plane of the elongated element 2. Similarly, the pivot axes 11 may be tilted sideways with respect to the mid-plane of the elongated element 2. A downside of tilting the pivot axes is that the drill jig will only be suitable for elongated elements 2 having a circular cross-section, and for example not for rectangular tubes.

In another embodiment, the pivot axes 11 are not in the middle between the contact elements 9a of the clamping members 9. The effect thereof is that the frame 3, which is centred with respect to the pivot axes 11, will not be centred with respect to the elongated element 2. For example, when the pivot axes 11 are located at one-third of the distance between the contact elements 9a of a clamping member 9, the holes 7, when the drill bit guides 5 are in line with the pivot axes 11, will also be located at one-third the distance between opposite sides of the elongated element 2.

As already described above, the drill bit guides 5 need not be on a single vertical line. As such, the drill bit guides 5 also do not need to be aligned with the pivot axes 11.

In another embodiment, the rod 10 does not cross the frame 3. Specifically, the rod 10 may be attached to both clamping members 9 on the same side of the frame 3, in particular of the plane α. This then changes the rotation direction of the clamping members 9 such that they will be opposite. The advantage of this embodiment is that a drill bit guide 5 can also be placed in the centre of the frame 3 which is not possible in the illustrated embodiments as the rod 10 would be in the way.

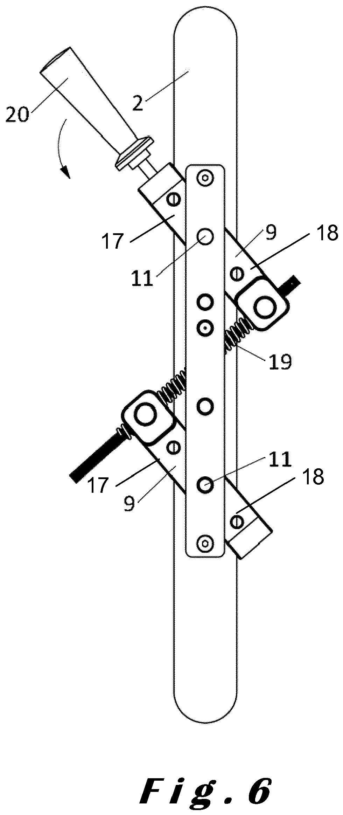

In an alternative embodiment, the rod 10 with the handle 13 is replaced by a spring 19 (see Figure 6). Specifically, two arms 17, 18 of different clamping members 9 can be connected to one another via a tensioning spring 19 that pulls the arms 17, 18 towards one another. When mounting the drill jig on the elongated element 2, the clamping members 9 are manually forced into an extended position, which can be done by means of the operating lever 20 provided on at least one the clamping members 9. The drill jig can first be applied with the clamping member 9 which is not provided with an operating lever onto the elongated element 2, after which the drill jig can be rotated to its upright position and, after having rotated the other clamping member 9 with the operating lever 20, the drill jig can also be applied with this second clamping member 9 onto the elongated element 2. Upon releasing this second clamping member 9, the spring will pivot it also towards its retracted position thereby clamping the drill jig to the elongated element 2. It will be appreciated that, as illustrated in Figure 6, it is also possible to provide two tensioning springs 21, 22, the first spring 21 connecting one arm 17 of the lowermost clamping member 9 to the frame 3 and the second spring 22 connecting one arm 18 of the uppermost clamping member 9 to the frame 3.

In another embodiment, the frame 3 comprises only one bar 3b with the clamping members 9 being attached thereto. As such, there is no need for pins 4 or other connecting means. Preferably, in this embodiment, bushings 8 are placed on the drill bit guides 5 to provide enough guidance for the drill bit 6 as the bar 3b can be thin and might not provide enough guidance to drill properly aligned holes 7.

In the embodiment illustrated in Figures 1 to 5, clamping the drill jig to the elongated element 2 can be achieved very easily. First, the drill jig is positioned, at the correct height, on the elongated element 2 with the clamping members 9 in their extended positions. This can be achieved by, for example, marking the specific height and/or the contour of one of the holes 7a-d to be drilled on the elongated element 2 and positioning the drill jig accordingly. Second, as illustrated by the arrows in Figure 2, the handle 13 is rotated which in turn rotates the rod 10 in one direction around its longitudinal axis. As such, the arm 17 of the lowermost clamping member 9 on the left side of the elongated element 2 is pulled towards the arm 18 of the uppermost clamping member 9 on the right side of the elongated element 2 thereby rotating both clamping members 9 in the same rotation direction towards their retracted positions. In this way, the clamping members 9 can be tensioned to clamp the frame 3 to the elongated element 2.

Moreover, as the pivot axis 11 of each clamping member 9 is in the middle of its respective arm 17, 18, the frame 3, by rotating the handle 13, will also centre with respect to the elongated element 2. As such, only indicating the height of one of the holes 7a-7d is sufficient to correctly position the drill jig with respect to the elongated element 2. It will be appreciated that, as the frame 3 is centred with respect to the elongated element 2, the drill bit guides 5a-d are also centred with respect thereto. Furthermore, when the drill bit guides 5a-d are located symmetrically with respect to the pivot axis 11 of both clamping members 9, the drill bit guides 5a-d are also located symmetrically with respect to a vertical mid plane of the elongated element 2.

To unclamp the drill jig, the handle 13 is rotated the other way. As such, the clamping members 9 are rotated in the opposite direction towards their extended position. The contact elements 9a therefore move away from the respective sides of the elongated element 2, thereby releasing the frame 3, and thus the drill jig, from the elongated element 2.

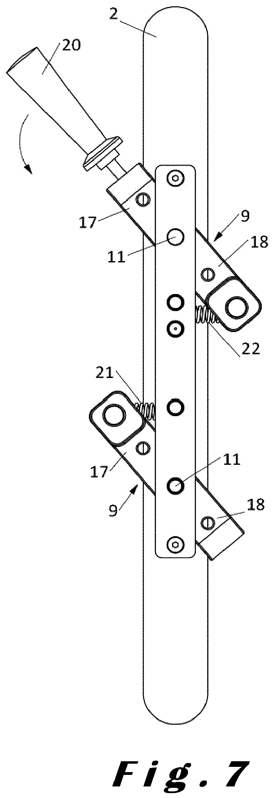

In the alternative embodiments illustrated in Figures 6 and 7, clamping the drill jig to the elongated element 2 can also be achieved very easily, albeit in a different way. The main difference is that the clamping members 9, due to the springs 19; 20, 21, are always in their retracted position, which prevents the drill jig from being placed onto the elongated element 2. To counter this, first, the lower clamping member 9 is placed on the elongated element 2 with the frame 2 at an inclination with respect thereto. Once the lower clamping member 9 is in place, the frame 3 can be pulled into a more vertical position, against the force of the spring 19, 21. Once the frame 3 is aligned with the elongated element 2, the lever 20 is used to move the upper clamping member 9 into an extended position, thereby allowing it to be placed on the elongated element 2. Finally, the lever 20 is released and, due to the spring 19; 22, the upper clamping member 9 moves into the retracted position thereby clamping the drill jig in the required orientation and position to the elongated element 2.

Although aspects of the present disclosure have been described with respect to specific embodiments, it will be readily appreciated that these aspects may be implemented in other forms.

## Claims

1. A drill jig for guiding a drill bit (6) when drilling holes in an elongated element (2), the drill jig comprising:
a frame (3) provided with a first drill bit guide (5a) to enable drilling a first hole (7a) in the elongated element (2);
two clamping members (9) attached to the frame (3), each clamping member (9) having two opposite contact elements (9a) and being movable, with its contact elements (9a), between an extended position and a retracted position to enable, when the drill jig is positioned on the elongated element (2), clamping the two opposite contact elements (9a) of each clamping member (9) against opposite sides of the elongated element (2) to secure the drill jig to the elongated element (2); and
an actuation mechanism for moving the clamping members (9) between their extended and retracted positions,
**characterized in that** the frame (3) of the drill jig is provided with at least one second drill bit guide (5b-d), which second drill bit guide (5b-d) enables drilling a second hole (7b-d) in the elongated element (2) in a predetermined position with respect to said first hole (7a) and **in that** each clamping member (9) is movable between its extended and retracted positions by being pivotably attached to the frame (3) around a pivot axis (11), with the clamping member (9) comprising two arms (17, 18) which are situated on opposite sides of said pivot axis (11) and which are provided with said contact elements (9a).

2. A drill jig according to claim 1, **characterized in that**, when the drill jig is secured to the elongated element (2), the opposite contact elements (9a) of the clamping members (9) abut the elongated element (2) on a distance from said pivot axis (11), measured in a direction perpendicular to said pivot axis (11), which is substantially the same for both opposite contact elements (2) of one clamping member (9).

3. A drill jig according to claim 1 or 2, **characterized in that** said first and second drill bit guides (5a-d) are located symmetrically with respect to a plane (β) passing through the two pivot axes (11) of the two clamping members.

4. A drill jig according to any one of the preceding claims, **characterized in that** the elongated element (2) has a longitudinal axis (16) and said pivot axis (11) is located in a plane (α) that is substantially perpendicular to said longitudinal axis (16).

5. A drill jig according to claim 4, **characterized in that** said pivot axis (11) intersects with said longitudinal axis (16).

6. A drill jig according to any one of the preceding claims, **characterized in that** said opposite contact elements (9a) have a surface arranged for abutting one of said opposite sides of the elongated element (2), which surface has a convex shape.

7. A drill jig according to any one of the preceding claims, **characterized in that** the actuation mechanism is configured for keeping the opposite contact elements (9a) of the clamping members (9) clamped against the opposite sides of the elongated element (2) when the drill jig is secured thereto.

8. A drill jig according to any one of the preceding claims, **characterized in that** said actuation mechanism comprises a rod (10) which couples one of said arms (17, 18) of one of said clamping members (9) with one of said arms (17, 18) of the other one of said clamping members (9).

9. A drill jig according to claim 8, **characterized in that** said rod (10) is screwed in one of said arms (17, 18) which are coupled by the rod (10), the rod (10) being rotatable about its longitudinal axis to enable to screw the rod (10) into and out of said arm to adjust the distance between said arms (17, 18) and hence to pivot the clamping members (9) around their pivot axes (11).

10. A drill jig according to claim 9, **characterized in that** the rod (10) is screwed in the two arms (17, 18) which are coupled by the rod (10), the rod having a threaded portion by means of which it is screwed in one of said arms (17) and a further threaded portion, having an opposite screw direction with respect to a screw direction of said threaded portion, by means of which it is screwed in the other one of said arms (18).

11. A drill jig according to any one of the claims 8 to 10, **characterized in that** one of the arms (17) which are coupled by said rod (10) is situated on one side of a plane (β) passing through the two pivot axes (11) of the two clamping members and the other one of said arms (18) is situated on the opposite side of said plane (β).

12. A drill jig according to any one of the claims 8 to 11, **characterized in that** the actuation mechanism further comprises an operating handle (13) attached to the rod (10) for rotating the rod (10) around its longitudinal axis.

13. A drill jig according to any one of the preceding claims 1 to 7, **characterized in that** the actuation mechanism comprises a spring (19) which is arranged between one of said arms (17) of one of said clamping members (9) and one of said arms (18) of the other one of said clamping members (9), which spring (19) urges the clamping members (9) to their retracted position.

14. A drill jig according to any one of the preceding claims 1 to 7, **characterized in that** the actuation mechanism (19, 20) comprises:
a first spring (21) connecting one of said clamping members (9) to the frame (3); and
a second spring (22) connecting the other one of said clamping members (9) to the frame (3), the first spring (21) and the second spring (22) urging the clamping members (9) to their retracted positions.

15. A drill jig according to claim 13 or 14, **characterized in that** at least one of said clamping members (9) comprises an operating lever (20) for moving the clamping member (9) towards its extended position.
